# EUROPÄISCHE PATENTSCHRIFT

(11) **EP 2 524 986 B1**
(45) Veröffentlichungstag und Bekanntmachung des Hinweises auf die Patenterteilung: **20.04.2016**
(21) Anmeldenummer: 12168271.0
(22) Anmeldetag: 16.05.2012
(51) Int. Cl.: D04H 1/4291, D04H 1/559

(54) **Mittel zur Entfettung von Speisen; Verfahren zur Entfettung einer Speise und Verwendung einer Fasermatte zur Entfettung einer Speise**
Means for removing fat from meals; method for removing fat from a meal and use of a fibre mat to remove fat from a meal
Agent de dégraissage de plats ; procédé de dégraissage d'un plat et utilisation d'un feutre en fibres pour dégraisser un plat

(30) Priorität: 19.05.2011 DE 202011100894 U
(43) Veröffentlichungstag der Anmeldung: 21.11.2012
(73) Patentinhaber: Henkys, Anne-Marie, 26789 Leer (DE)
(72) Erfinder: Henkys, Anne-Marie, 26789 Leer (DE)
(74) Vertreter: Stenger Watzke Ring

(56) Entgegenhaltungen:
- EP-A1- 1 035 244
- WO-A1-01/29301
- WO-A1-03/039861
- WO-A2-03/037612
- US-A- 3 764 527

## Beschreibung

Die Erfindung betrifft ein Mittel zur Entfettung von Speisen in Form einer Fasermatte bestehend aus Polypropylen-Vliesen. Des Weiteren betrifft die Erfindung ein Verfahren zur Entfettung einer Speise, bei dem eine Fasermatte aus Polypropylen-Vlies vor, während oder nach der Zubereitung der Speise auf die Speise derart aufgelegt wird, dass während der Einwirkzeit Fette aus der Speise von der Fasermatte aufgenommen werden. Schließlich betrifft die Erfindung einer Verwendung einer aus zumindest drei übereinanderliegenden Polypropylen-Vliesen bestehenden Fasermatte zur Entfettung einer Speise vor, während oder nach der Zubereitung der Speise.

Bei der Zubereitung von Speisen aller Art wird man im Allgemeinen auf die Verwendung von Fetten bzw. Ölen nicht verzichten können. Fette und Öle sind chemisch betrachtet Glyceride, d.h. Ester aus Fettsäuren und Glycerin. Sie sind an sich wünschenswert und in kleinen Anteilen in Speisen als Geschmacksträger auch erforderlich.

Aus Gründen der Gesundheitsvorsorge möchte man jedoch den Fett- und Ölanteil in der Nahrung so gering wie möglich halten, da bereits große Anteile der Bevölkerung in den Industriestaaten an Überfettung leiden.

Weil man auf die Verwendung von Fetten und Ölen bei der Speisenzubereitung jedoch von vornherein nicht verzichten kann, stellt sich das Problem überschüssige Glyceride wieder zu entfernen.

Nach dem Stand der Technik kann man Fette und Öle aus heißen Speisen mit Kellen oder Löffeln abschöpfen. Diese Methode erlaubt aber keine befriedigende Entfettung. Außerdem geht Speisengut verloren. Bei kalten Speisen, wie z. B. Bratensoßen oder Suppen, kann man versuchen, das gelierte Fett mechanisch zu entfernen. Dieser Vorgang ist jedoch mühsam und zeitaufwendig, deshalb für Großküchen völlig ungeeignet. Zudem treten bei dieser Methode erhebliche Verluste an Soßen und Bratensaft ein.

Die gebräuchlichste Methode ist, das Kochgut (insbesondere Saucen, Fonds, Brühen) erkalten zulassen. Insbesondere sogar herunter kühlen, um alle Fette zu verfestigen. Das abgesonderte Fett wird nach vielen Stunden abgehoben und dem Sondermüll (Restaurants) bzw. Restmüll (priv. Haushalte) zugeführt. Diese Methode ist extrem zeitaufwendig (Kosten), energieverschwendend und nicht perfekt ohne auch Kochgut zu vernichten. Diese Methode wird insbesondere von der gehobenen Gastronomie und der gehobenen privaten Küche angewandt.

In Restaurants werden des Weiteren spezielle Soßenkannen verwendet, um das Öl bzw. flüssige Fett abzugießen.

Nach einer anderen Methode kann man versuchen, warme Soßen, Suppen und Fonds mit Küchenpapier bzw. Mülltüchern zu entfetten. Dazu muss das Papier bzw. das Tuch knapp unter die Oberfläche der zu entfettenden Speisen eingetaucht werden. Das Papier bzw. das Tuch soll dann das Fett aufsaugen. Diese Methode erwies sich als völlig unzulänglich und unhygienisch, da das Papier in den heißen Nahrungsmitteln leicht zerfasert und dann die Speisen verschmutzt. Zudem hat sich die Saugkapazität dieser Mittel als unbefriedigend herausgestellt. Außerdem nehmen Papier oder Textil auch wässrige Speisenbestandteile auf.

Günstiger gestaltet sich das Entfettungsverfahren nach US 6 152 025. Aus diesem Stand der Technik ist ein Absorber aus mehreren Schichten beispielsweise eines Polypropylen-Vlieses bekannt. Die Schichten sind übereinander angeordnet und im Bereich zwei einander gegenüberliegenden Längskanten miteinander verbunden, sodass sich zwischen den Schichten an gegenüberliegenden Längskanten offene Taschen ausbilden, die der Aufnahme von Fetten oder Ölen dienen. Diese Ausgestaltung hat insbesondere den Nachteil, dass nicht sichergestellt ist, dass keine Partikel des Absorbers aus den Taschen austreten und in der Speise verbleiben. Darüber hinaus ist der Absorber nur durch kostenintensive Verfahren herstellbar.

Auch bei dieser Methode werden mechanisch Speisenbestandteile in den Taschen aufgenommen.

Ferner ist aus der EP 1 035 244 A1 eine Küchenfolie zum Einwickeln von Nahrungsmitteln, wie insbesondere Gemüse, Fleisch und Fisch zum Beispiel zur Absorption von Verunreinigungen oder Fett bekannt. Besagte Folie kann je nach den gewünschten Eigenschaften aufgebaut sein. So kann die Folie hydrophile und/oder hydrophobe Eigenschaften aufweisen. Eine hydrophobe Folie besteht bevorzugterweise aus hydrophoben Fasern aus Polypropylen. Bevorzugt ist die Folie aus zwei äußeren und einer inneren Faserschicht aufgebaut, wobei die einzelnen Faserschichten durch Schmelzschweißen miteinander verbunden sind. Die Gesamtdicke der Folie beträgt hierbei maximal 1 mm.

Nachteilig ist bei dieser Küchenfolie insbesondere ihre vergleichsweise geringe mechanische Stabilität und ihre vergleichsweise geringe Fettaufnahmekapazität.

Der Erfindung liegt die **Aufgabe** zugrunde, ein Mittel der gattungsbildenden Art bereitzustellen, dass die Nachteile des Standes der Technik nicht aufweist und mit dem schnell und in einfacher Weise Fette und Öle aus Speisen aller Art entfernt werden können.

Des Weiteren ist **Aufgabe** der Erfindung ein gattungsgemäßes Verfahren derart weiterzubilden, dass Speisen in einfacher und zuverlässiger Weise entfettet werden können, wobei ein hoher Entfettungsgrad erzielbar und die Speisen nicht verunreinigt werden. Schließlich liegt der Erfindung die **Aufgabe** zugrunde, eine Verwendung einer Fasermatte zu oben genannten Zwecken anzugeben, die eine Handhabung nicht nur im professionellen, sondern auch im nicht professionellen Bereich ermöglicht.

Die **Lösung** der voranstehend genannten Aufgabe sieht ein Mittel zur Entfettung von Speisen in Form einer Fasermatte gemäß Anspruch 1 vor. Mit dem Begriff Flächenmasse wird hier das Flächengewicht, angegeben in g/m² gemeint.

Zur verfahrensseitigen **Lösung** der voranstehend dargestellten Aufgabe wird ein Verfahren nach Anspruch 10 vorgeschlagen.

Schließlich ist zur verwendungsseitigen **Lösung** der voranstehend genannten Aufgabe eine Verwendung gemäß Anspruch 14 vorgesehen.

Die verdichteten Vliesmatten und die Verfestigungspunkte erhöhen die Benetzung und damit die Aufsauggeschwindigkeit des so präparierten Vlieses.

Vorteilhafte Ausgestaltungen des erfindungsgemäßen Mittels bzw. des erfindungsgemäßen Verfahrens ergeben sich aus den Unteransprüchen sowie der nachfolgenden Beschreibung.

Gemäß der vorliegenden Erfindung wird ein einfaches und trotzdem sehr wirksames Mittel zur Entfettung von Speisen bereitgestellt. Die dazu beanspruchte Fasermatte besteht aus mindestens drei übereinander liegenden Polypropylen-Vliesen.

Vliese bestehen allgemein betrachtet aus lose neben- und übereinanderliegenden Fasern, welche noch nicht miteinander verbunden sind. Damit man diese Vliese zur Speisenentfettung verwenden kann, müssen sie verfestigt werden.

Die Erfindung schlägt die Verwendung von Polypropylen-Vliesen, d.h. Vliesen aus Polypropylen-Fasern vor. Polypropylen ist das thermoplastische Polymer des Propylens und zeichnet sich durch hohe Härte, Rückstellfähigkeit, Steifheit und Wärmebeständigkeit aus. Kurzfristiges Erwärmen von Polypropylen ist bis 140°C möglich, ohne dass eine Gefügeveränderung verursacht wird. Die hier in Rede stehenden Polypropylen-Fasern haben in Form eines Vlieses eine hydrophobe und lipophile Ausgestaltung, sodass das erfindungsgemäße Mittel sich insbesondere dadurch auszeichnet, dass es in einfacher Weise Fett aus Speisen aufnimmt, andere Bestandteile der Speisen, wie beispielsweise Wasser aber in der Speise verbleiben.

Die Gewinnung der Polypropylen-Vliese erfolgt über die Schmelzeextrusion von Polypropylen durch Spinndüsen. Auf weitere Details braucht hier nicht eingegangen werden, weil die Herstellung der faserartigen Polypropylen-Vliese zum Stand der Technik gehört. Bezüglich Einzelheiten sei auf die Fachliteratur verwiesen, z. B.: A. Albrecht, H. Fuchs, W. Kittelmann: Vliesstoffe, Willey-VCH, Weinheim, 2000.

Damit die Polypropylen-Vliese im Sinne der vorliegenden Erfindung weiterverarbeitet und benutzt werden können, müssen sie verfestigt werden. Für diese Aufgabe hat sich die Verfestigung, d.h. Bindung der Vliesfasern bzw. Vliesfilamente auf thermischen Wege durch Kalandrierung als besonders günstig erwiesen, weil sich dabei gleichzeitig zwei äußere Polypropylen-Vliesschichten mit erhöhten Flächenmassen mit einer mittleren oder mehreren mittleren Vliesschichten mit niedrigeren Flächenmassen kombinieren und binden lassen. Die Bindung erfolgt erfindungsgemäß an Kontaktpunkten der beheizten Kalanderwalzen. An diesen Kontaktpunkten verschmelzen die Polypropylenfasern und bilden so eine Polypropylen-Vliesmatte aus. Hierzu wird die Verfestigung bei einer definierten Temperatur ausgeführt, sodass ein vollständiges Schmelzen der Vliesfasern vermieden wird und die Vliesstruktur erhalten bleibt.

Die so erhaltenen Vliesmatten zeigen erfindungsgemäß nach außen eine dichte und relativ glatte Oberfläche, von der sich keine Fusseln oder Faserpartikel ablösen, da ansonsten eine Verunreinigung der Speisen zu befürchten wäre.

Die gebundenen Vliese, genauer Vliesstoffe, weisen entsprechend der Breiten der Kalanderwalzen unterschiedliche Abmessungen auf. Man kann nun aber durch Ausschneiden oder Ausstanzen den Vliesmatten jede gewünschte Form und Abmessung geben. Bevorzugt werden rechteckige oder runde Vliesmatten. Praktisch liegen die Abmessungen oft bei 5 bis 50 cm, insbesondere bei 5 bis 25 cm im Durchmesser bei runden Formen bzw. 5 bis 50 cm Kantenlänge bei rechteckigen oder polygonalen Vliesmatten.

Die Vliesmatten können aus einem Ausgangsmaterial ausgestanzt werden. Vorzugsweise werden beheizte Stanzen verwendet, die die Ränder der Vliesmatten beim Stanzen gleichzeitig thermisch verfestigen, sodass sie nicht flusen und die Benetzung (Aufsauggeschwindigkeit) erhöht wird.

Nach einem weiteren Merkmal der vorliegenden Erfindung sind die Fasermatten aus Polypropylen-Vliesen gegen Wärmeeinwirkung von -30°C bis +160°C vorzugsweise von (-10°C bis +130°C) stabil, d.h. sie zersetzen sich nicht und geben auch keine Inhaltsstoffe bei der Entfettung von Speisen ab. Geschmacksveränderungen an den behandelten Speisen treten ebenfalls nicht auf.

Die durch thermische Kalanderbindung verfestigten Polypropylen-Vliese weisen Flächenmassen von 10 bis 500 g/m² auf, in Abhängigkeit von der Schichtenanzahl und der Dicke der Vliese. Bevorzugt angewendet werden Fasermatten mit Flächenmassen um 200 g/m² (150 bis 250 g/m²) Die Durchmesser der Polypropylenn-Fasern in den Vliesen liegen gewöhnlich zwischen 20 µm bis 0,05 mm; die Faserlängen bewegen sich im 1 m-Bereich.

Die Dicken der Fasermatten auf Polypropylen-Basis liegen erfindungsgemäß zwischen 1 und 20 mm, bevorzugt 2 bis 5 mm. Das Öl- bzw. Fettbindevermögen der oleophilen Polypropylen-Fasermatten liegt deutlich über 10 g pro Gramm Fasermatte.

Die erfindungsgemäßen Speisenentfetter werden beim Garprozess dann eingesetzt, wenn das Fett oder Öl seine Funktion erfüllt hat, oder wenn es unerwünscht ist. Dazu wird der Kochvorgang kurz unterbrochen und das beanspruchte Polypropylen-Vlies als Formteil oder individueller Zuschnitt auf die zu entfettende Speise gelegt. Die Vliesmatte saugt in Sekundenschnelle alle flüssigen Fette und Öle auf und hält sie fest. Zum Entsorgen der Vliesmatte wird mit einer Gabel oder einem Löffel das vollgesaugte Vlies auf einen Teller gelegt und dem Restmüll zugeführt. Bei noch zu hohen verbleibenden Öl- und Fettresten in den Speisen lässt sich der Vorgang wiederholen.

Einsatzbereiche für die erfindungsgemäßen Speisenentfetter sind: Gastronomie, Krankenhäuser, Heime, Kantinen, Großküchen und auch private Haushalte.

Anwenden lassen sich die Speisenentfetter auf Vliesbasis beispielsweise bei Suppen, Brühen, Eintöpfen, Braten, Diätgerichten aller Art, Fonds und Saucen.

Das erfindungsgemäße Mittel kann im Wesentlichen kreisrund und entsprechend dem Innendurchmesser eines Topfes ausgebildet sein. In diesem Zustand kann es sowohl zur Auflage auf Speisen im Topf, als auch als Unterlage für beispielsweise gebratenes Fleisch, gebratenen Fisch oder frittierte Lebensmittel, wie Pommes Frites, genutzt werden. Darüber hinaus besteht die Möglichkeit, das Mittel rechteckförmig oder in anderer Weise polygonal auszubilden, sodass sich diese Ausführungsform insbesondere für die Anordnung auf einem Backblech eignet, um beispielsweise hierauf Speisen im Backofen zu bereiten, die dann auf einem Mittel angeordnet sind, sodass während des Fertigungsprozesses bereits aus den Speisen austretende Fette vom Mittel aufgenommen werden. Die Größe eines derartigen Mittels kann entsprechend der Auflagefläche ausgebildet sein, so beispielsweise der Fläche des Backbleches entsprechen.

Die beanspruchten Speisenentfetter auf Polypropylen-Vliesbasis trennen schnell, ohne lange Abkühlzeiten, sauber, gründlich, hygienisch und wirtschaftlich überschüssiges Fett oder Öl von den zubereiteten Speisen.

Die äußeren Vliese aus Polypropylen-Fasern weisen eine dichte und glatte Oberfläche auf, sodass die Gefahr verringert ist, dass sich aus diesen Vliesen einzelne Polypropylen-Fasern lösen, die dann nach dem Entfettungsvorgang in der Speise verbleiben können.

Das erfindungsgemäße Mittel muss für einen großen Temperaturbereich stabil ausgebildet sein. Diesbezüglich sind die Vliese gegen Wärmeeinwirkung von -10°C bis +130°C derart stabil ausgebildet, dass sie sich nicht zersetzen und keine Inhaltsstoffe bei der Entfettung von Speisen abgeben. Insbesondere ist darauf zu achten, dass sich die Polypropylen-Fasern in dem gegebenen Temperaturbereich nicht in ihrem Aggregatzustand verändern, beispielsweise verflüssigen. Ferner ist darauf zu achten, dass die Bindung der Fasern aus Polypropylen nicht innerhalb dieses Temperaturbereichs schwächt oder gar aufgehoben wird. Es hat sich daher erfindungsgemäß als vorteilhaft erwiesen, die Polypropylen-Vliese mittels Kalandrierverfahrens thermisch zu binden. Bei diesen Kalandrierverfahren werden die aufeinanderliegenden Polypropylen-Vliese im Randbereich und/oder flächig, insbesondere teilflächig miteinander verbunden. Gleichzeitig erfolgt aber auch eine ergänzende thermische Bindung der Polypropylen-Fasern, sodass auch jedes einzelne Polypropylen-Vlies eine ausreichende thermische Stabilität aufweist.

Nach einem weiteren Merkmal der Erfindung ist vorgesehen, dass die beiden äußeren Vliese auf eine höhere Flächenmasse verdichtet sind, sodass eine Oberfläche ohne Flusen entsteht. Der wesentliche Effekt des erfindungsgemäßen Mittels, nämlich die Aufnahme von Fetten und Ölen ist somit auf das mittlere Vlies konzentriert, welches zwischen den beiden äußeren Vliesen eingeschlossen ist. Die beiden äußeren Vliese müssen keine übereinstimmenden Flächenmassen aufweisen. Es kann auch vorgesehen sein, dass die beiden äußeren Vliese aus Polypropylen-Fasern unterschiedliche Flächenmassen (Flächengewichte) aufweisen, beide Flächenmassen jedoch höher sind, als die Flächenmasse des mitteleren Polypropylen-Vlieses. Bei dieser Ausgestaltung kann es von Vorteil sein, wenn eine große Oberfläche eines äußeren Vlieses eine Markierung aufweist, die eine erfindungsgemäße Verwendung des Mittels in zutreffender Ausrichtung zur Speise vereinfacht. Beispielsweise kann es hier von Vorteil sein, das Vlies mit der höchsten Flächenmasse in Richtung auf die Speise auszurichten, sodass beispielsweise auch ein nachfolgendes Herausholen des Mittels aus der Speise mittels beispielsweise einer Gabel nicht dazu führt, dass Polypropylen-Vliese aus dem Mittel herausgelöst werden und in der Speise verbleiben. Hier ist nachgewiesen, dass dieses Vlies keine Globalmigration aufweist und somit lebensmitteltauglich ist.

In gleicher Weise ist sicherzustellen, dass die Polypropylen-Vliese bei Kontakt mit heißen Lebensmitteln keine Geruchs- oder Geschmacksbeeinträchtigung der Speisen hervorrufen. Auch dies erfolgt dadurch, dass die Polypropylen-Fasern der einzelnen Vliese thermisch gebunden und die Polypropylen-Vliese miteinander verbunden sind, sodass Geruchs- oder Geschmacksbeeinträchtigung durch Absonderung von Fasern oder Faserbestandteilen verhindert ist.

Bei dem erfindungsgemäßen Verfahren ist vorgesehen, dass eine Fasermatte aus Polypropylen-Vlies vor, während oder nach der Zubereitung der Speise auf die Speise derart aufgelegt wird, dass während einer Einwirkzeit Fette aus der Speise von der Fasermatte aufgenommen werden. Die Fasermatte besteht zu diesem Zweck erfindungsgemäß aus mindestens drei übereinanderliegenden Polypropylen-Vliesen unterschiedlicher Flächenmassen, wobei die beiden äußeren Polypropylen-Vliese auf eine höhere Flächenmasse, als das mittlere Polypropylen-Vlies verdichtet werden, sodass eine Oberfläche frei von Flusen entsteht. Die Vliese mit der höheren Flächenmasse sind demzufolge dichter ausgebildet. Das mittlere Vlies dient in erster Linie der Aufnahme und Speicherung der Fette, die durch die dichteren Vliese in die mittleren Vlieslagen diffundieren und dort gebunden werden. Somit kann auch beim Herausnehmen der Fasermatte aus der Speise in einem erfindungsgemäßen Verfahren sichergestellt werden, dass die gebundenen Fette nicht durch die dichteren außenliegenden Vliese zurück in die Speise diffundieren. Zwar ist hier die Porengröße unverändert, jedoch werden die Fette und Öle im mittleren Vlies gebunden, sodass im Unterschied zur Diffusion der Fette und Vliese in das mittlere Vlies beim Herausnehmen der Fasermatte aus der Speise zusätzliche Bindungskräfte des mittleren Vlieses auf die Fette und Öle wirken, die ein Austreten der Fette und Öle verhindern.

Bei dem erfindungsgemäßen Verfahren wird insbesondere eine dreilagige Fasermatte zur Entfettung der Speise verwendet.

Das nachfolgende Beispiel soll die Anwendungsmöglichkeiten der erfindungsgemäßen Fasermatten erläutern, sie jedoch nicht einschränken.

In einem Edelstahltopf von 15 cm Durchmesser wurden 1 l Wasser mit 50 g Butter bei 85°C homogen vermischt. Mit einer Gabel wurde dann eine Fasermatte aus Polypropylen-Vlies vorsichtig auf die Wasseroberfläche gelegt. Der Durchmesser der kreisrunden Fasermatte betrug 12 cm, die Dicke 5 mm. Nach einer Einwirkungszeit von etwa 25 s wurde das Vlies wieder mit der Gabel entnommen und zur Seite gelegt. Nach Lufttrocknung des Vlieses bei Raumtemperatur wurde das Vlies zurückgewogen. Daraus konnte man ableiten, dass das Vlies bei einmaliger Applikation 30 g Butter aus dem Modellansatz aufgenommen hatte. Das gebrauchte Vlies wurde anschließend als Hausmüll entsorgt. Das Vlies kann eine Aufnahmekapazität bis zum 25-fachen des Eigengewichtes aufweisen. In der Praxis wird abhängig von der Fettkonsistenz eine Aufnahmekapazität von ca. dem 18-fachen des Eigengewichts des Vlieses erreicht.

## Patentansprüche

1. Mittel zur Entfettung von Speisen in Form einer Fasermatte bestehend aus zumindest drei übereinanderliegend angeordneten Polypropylen-Vliesen aus verfestigten Fasern, die Schichtdicken von 1 bis 20 mm, vorzugsweise von 2 bis 10 mm aufweisen, wobei zwei äußere Vliese eine gegenüber einem zwischen den äußeren Vliesen angeordneten mittleren Vlies höhere Flächenmasse aufweise wobei die Polypropylen-Vliese mittels Kalandrierverfahren an Kontaktpunkten mit beheizten Kalanderwalzen thermisch gebunden sind, wobei die äußeren Vliese eine derart dichte und glatte Oberfläche aufweisen, dass sich von dieser keine Fusseln oder Faserpartikel ablösen.

2. Mittel nach Anspruch 1, **dadurch gekennzeichnet, dass** die Vliese gegen Wärmeeinwirkung von -10°C bis 130°C derart stabil sind, dass sie sich nicht zersetzen und keine Inhaltsstoffe bei der Entfettung von Speisen abgeben.

3. Mittel nach den Ansprüchen 1 oder 2, **dadurch gekennzeichnet, dass** die beiden äußeren Vliese auf eine höhere Flächenmasse verdichtet sind, sodass eine Oberfläche ohne Flusen entsteht.

4. Mittel nach den Ansprüchen 1 bis 3, **dadurch gekennzeichnet, dass** die Polypropylen-Vliese bei Kontakt mit heißen Lebensmitteln keine Geruchs- der Geschmacksbeeinträchtigung der Speisen hervorrufen.

5. Mittel nach den Ansprüchen 1 bis 4, **dadurch gekennzeichnet, dass** die Polypropylen-Vliese Flächenmassen von 10 bis 500 g/m², vorzugsweise von 50 bis 250 g/m² aufweisen.

6. Mittel nach den Ansprüchen 1 bis 5, **dadurch gekennzeichnet, dass** die Fasern der Polypropylen-Vliese einen mittleren Durchmesser von 10 µm bis 0,2 mm, vorzugsweise von 20 µm bis 0,05 mm aufweisen.

7. Mittel nach den Ansprüchen 1 bis 6, **dadurch gekennzeichnet, dass** die Fasern der Polypropylen-Vliese Längen von 0,5 cm bis 10 m, vorzugsweise von 5 cm bis 100 cm aufweisen.

8. Mittel nach den Ansprüchen 1 bis 7, **dadurch gekennzeichnet, dass** die Polypropylen-Vliese ein Öl- bzw. Fettbindevermögen von mindestens 10 g pro Gramm Polypropylen-Vlies aufweisen.

9. Mittel nach einem der vorhergehenden Ansprüche **gekennzeichnet durch** eine kreisrunde Ausgestaltung mit einem Durchmesser von 12 cm und/oder einer Dicke von 5 mm.

10. Verfahren zur Entfettung einer Speise, bei dem eine Fasermatte aus Polypropylen-Vlies vor, während oder nach der Zubereitung der Speise auf die Speise derart aufgelegt wird, dass während einer Einwirkzeit Fette aus der Speise von der Fasermatte aufgenommen werden, wobei die Fasermatte aus mindestens drei übereinander liegenden, Schichtdicken von 1 bis 20 mm, vorzugsweise von 2 bis 10 mm aufweisenden und aus Fasern bestehenden verfestigten Polypropylen-Vliesen unterschiedlicher Flächenmassen ausgebildet wird und die beiden äußeren Polypropylen-Vliese auf eine höhere Flächenmasse, als das mittlere Polypropylen-Vlies verdichtet werden, wobei die Polypropylen-Vliese mittels Kalandrierverfahren an Kontaktpunkten mit beheizten Kalanderwalzen thermisch gebunden werden, wobei die äußeren Vliese mit einer derart dichten und glatten Oberfläche ausgebildet werden, dass sich von dieser keine Fusseln oder Faserpartikel ablösen und, dass eine Oberfläche frei von Flusen entsteht.

11. Verfahren nach Anspruch 10, **dadurch gekennzeichnet, dass** durch die gegen Temperaturschwankungen zwischen -10 bis +130°C stabilen Polypropylen-Vliese keine Inhaltsstoffe an die Speise abgegeben werden.

12. Verfahren nach Anspruch 10 oder 11, **dadurch gekennzeichnet, dass** die Polypropylen-Vliese bei Kontakt mit der heißen Speise keine Geruchs- oder Geschmacksbeeinträchtigung hervorrufen.

13. Verfahren nach einem der Ansprüche 10 bis 12, **dadurch gekennzeichnet, dass** durch jedes Gramm der Polypropylen-Vliese zumindest 10 Gramm Öl bzw. Fett gebunden wird.

14. Verwendung einer aus zumindest drei übereinander liegenden Polypropylen-Vliesen mit Schichtdicken von 1 bis 20 mm, vorzugsweise von 2 bis 10 mm bestehenden Fasermatte zur Entfettung einer Speise vor, während oder nach der Zubereitung der Speise, wobei die Fasermatte aus mindestens drei übereinander liegenden, aus Fasern bestehenden verfestigten Polypropylen-Vliesen unterschiedlicher Flächenmassen ausgebildet wird und die beiden äußeren Polypropylen-Vliese auf eine höhere Flächenmasse, als das mittlere Polypropylen-Vlies verdichtet werden, wobei die Polypropylen-Vliese mittels Kalandrierverfahren an Kontaktpunkten mit beheizten Kalanderwalzen thermisch gebunden werden, so dass die äußeren Vliese eine derart dichte und glatte Oberfläche aufweisen, dass sich von dieser keine Fusseln oder Faserpartikel ablösen und, dass eine Oberfläche frei von Flusen entsteht.

## Claims

1. A means for degreasing foods in form of a fibre mat composed of at least three superimposed polypropylene fleeces made of solidified fibres, which comprise layer thicknesses comprised between 1 and 20 mm, preferably between 2 and 10 mm, wherein two outer fleeces comprise a higher surface mass than the one of an intermediate fleece arranged between the outer fleeces, wherein the polypropylene fleeces are thermally bound at contact points by means of a calendaring process using heated calendar rollers, wherein the outer fleeces comprise a dense and smooth surface such that no fluff or fibre particles will come off from this one.

2. A means according to claim 1, **characterized in that** the fleeces are resistant to heat exposure comprised between -10°C and 130°C, such that they do not decompose nor release substances during the degreasing of foods.

3. A means according to claims 1 or 2, **characterized in that** the two outer fleeces have been compressed into a higher surface mass, such that a surface without fluff is obtained.

4. A means according to claims 1 through 3, **characterized in that** the polypropylene fleeces do not negatively affect the taste or smell of the foods, if they get into contact with hot foodstuffs.

5. A means according to claims 1 through 4, **characterized in that** the polypropylene fleeces comprise surface masses comprised between 10 and 500 g/m², preferably between 50 and 250 g/m².

6. A means according to claims 1 through 5, **characterized in that** the fibres of the polypropylene fleeces comprise an average diameter comprised between 10 µm and 0.2 mm, preferably between 20 µm and 0.05 mm.

7. A means according to claims 1 through 6, **characterized in that** the fibres of the polypropylene fleeces have lengths comprised between 0.5 cm and 10 m, preferably between 5 cm and 100 cm.

8. A means according to claims 1 through 7, **characterized in that** the polypropylene fleeces comprise an oil respectively grease binding capacity of at least 10 g per gram polypropylene fleece.

9. A means according to one of the preceding claims, **characterized by** a circular design having a diameter of 12 cm and/or a thickness of 5 mm.

10. A method for degreasing food, in which a fibre mat made of polypropylene fleece is laid onto the food before, during or after the preparation of the food, such that fats in the food will be absorbed by the fibre mat during a reaction time, wherein the fibre mat is formed by solidified polypropylene fleeces composed of at least three superimposed layers having thicknesses comprised between 1 and 20 mm, preferably between 2 and 10 mm and being made of fibres, the polypropylene fleeces having different surface masses, wherein the two outer polypropylene fleeces are compressed into a higher surface mass than the one of the intermediate polypropylene fleece, wherein the polypropylene fleeces are thermally bound at contact points by means of a calendaring process using heated calendar rollers, wherein the outer fleeces comprise a dense and smooth surface such that no fluff or fibre particles will come off from this one, and that a surface is obtained which is free of fluff.

11. A method according to claim 10, **characterized in that** no substances are transmitted to the food by the polypropylene fleeces which are resistant against temperature variations comprised between -10 and +130°C.

12. A method according to claim 10 or 11, **characterized in that** the polypropylene fleeces do not negatively affect the taste or smell of the foods, if they get into contact with the hot foodstuffs.

13. A method according to one of the claims 10 through 12, **characterized in that** each gram of the polypropylene fleeces binds at least 10 grams oil respectively fat.

14. A utilization of a fibre mat composed of at least three superimposed polypropylene fleeces having layer thicknesses comprised between 1 and 20 mm, preferably between 2 and 10 mm, for degreasing food before, during or after the preparation of the food, wherein the fibre mat is formed by at least three superposed solidified polypropylene fleeces made of fibres, the polypropylene fleeces having different surface masses, wherein the two outer polypropylene fleeces are compressed into a higher surface mass than the one of the intermediate polypropylene fleece, wherein the polypropylene fleeces are thermally bound at contact points by means of a calendaring process using heated calendar rollers, such that the outer fleeces comprise a dense and smooth surface such that no fluff or fibre particles will come off from this one, and that a surface is obtained which is free of fluff.

## Revendications

1. Moyen de dégraissage de nourriture en forme d'un mat de fibres composé d'au moins trois non-tissés en polypropylène superposés et consistant en fibres solidifiées, lesquels ont des épaisseurs de couche comprises entre 1 et 20 mm, de préférence entre 2 et 10 mm, deux non-tissés extérieurs comprenant une masse surfacique plus élevée que celle d'un non-tissé intermédiaire disposé entre les non-tissés extérieurs, les non-tissés en polypropylène étant thermiquement liés à des points de contact par moyen d'un procédé de calandrage utilisant des rouleaux de calandre chauffés, les non-tissés extérieurs comprenant une surface étanche et lisse de sorte qu'il n'y a pas de peluches ou de particules de fibre qui se détacheront de celle-ci.

2. Moyen selon la revendication 1, **caractérisé en ce que** les non-tissés sont résistants contre les effets de température comprise entre -10°C et 130°C, de sorte qu'ils ne se décomposent pas et ne dégagent pas de substances pendant le dégraissage de nourriture.

3. Moyen selon les revendications 1 ou 2, **caractérisé en ce que** les deux non-tissés extérieurs sont comprimés pour avoir une masse surfacique plus élevée, de sorte qu'on obtient une surface sans peluches.

4. Moyen selon les revendications 1 à 3, **caractérisé en ce que** les non-tissés en polypropylène ne compromettent pas l'odeur ou le goût de la nourriture s'ils viennent en contact avec des aliments chauds.

5. Moyen selon les revendications 1 à 4, **caractérisé en ce que** les non-tissés en polypropylène comprennent des masses surfaciques comprises entre 10 et 500 g/m², de préférence entre 50 et 250 g/m².

6. Moyen selon les revendications 1 à 5, **caractérisé en ce que** les fibres des non-tissés en polypropylène comprennent un diamètre moyen de 10 µm à 0,2 mm, de préférence de 20 µm à 0,05 mm.

7. Moyen selon les revendications 1 à 6, **caractérisé en ce que** les fibres des non-tissés en polypropylène ont des longueurs comprises entre 0,5 cm et 10 m, de préférence entre 5 cm et 100 cm.

8. Moyen selon les revendications 1 à 7, **caractérisé en ce que** les non-tissés en polypropylène comprennent une capacité de liaison d'huile respectivement de graisse d'au moins 10 g par gramme de non-tissé en polypropylène.

9. Moyen selon l'une des revendications précédentes, **caractérisé par** une configuration circulaire ayant un diamètre de 12 cm et/ou une épaisseur de 5 mm.

10. Procédé de dégraissage de nourriture, dans lequel on pose un mat de fibres en non-tissé en polypropylène sur la nourriture avant, pendant ou après la préparation de la nourriture, de sorte que le mat de fibres absorbe des graisses de la nourriture pendant une durée de contact, le mat de fibres étant formé par des non-tissés solidifiés et composés d'au moins trois couches superposées ayant des épaisseurs comprises entre 1 et 20 mm, de préférence entre 2 et 10 mm, et consistant en fibres, les non-tissés en polypropylène ayant des masses surfaciques différentes, les deux non-tissés extérieurs étant comprimés pour avoir une masse surfacique plus élevée que celle du non-tissé intermédiaire en polypropylène, les non-tissés en polypropylène étant thermiquement liés à des points de contact par moyen d'un procédé de calandrage utilisant des rouleaux de calandre chauffés, les non-tissés extérieurs étant formés avec une surface étanche et lisse de sorte qu'il n'y a pas de peluches ou de particules de fibre qui se détacheront de celle-ci, et qu'on obtient une surface libre de peluches.

11. Procédé selon la revendication 10, **caractérisé en ce que** les non-tissés en polypropylène résistants à des variations de température entre -10 et +130°C ne transmettent pas de substances à la nourriture.

12. Procédé selon la revendication 10 ou la revendication 11, **caractérisé en ce que** les non-tissés en polypropylène ne compromettent pas l'odeur ou le goût de la nourriture s'ils viennent en contact avec les aliments chauds.

13. Procédé selon l'une des revendications 10 à 12, **caractérisé en ce que** chaque gramme des non-tissés en polypropylène lie au moins 10 grammes d'huile ou de graisse.

14. Utilisation d'un mat de fibres composé d'au moins trois non-tissés en polypropylène superposés ayant des épaisseurs de couche comprises entre 1 et 20 mm, de préférence entre 2 et 10 mm, pour dégraisser une nourriture avant, pendant ou après la préparation de la nourriture, le mat de fibres étant formé par au moins trois non-tissés en polypropylène solidifiés et superposés et consistant en fibres, les non-tissés en polypropylène ayant des masses surfaciques différentes, et les deux non-tissés extérieurs en polypropylène étant comprimés pour avoir une masse surfacique plus élevée que celle du non-tissé intermédiaire en polypropylène, les non-tissés en polypropylène étant thermiquement liés à des points de contact par moyen d'un procédé de calandrage utilisant des rouleaux de calandre chauffés, de sorte que les non-tissés extérieurs sont formés avec une surface étanche et lisse de sorte qu'il n'y a pas de peluches ou de particules de fibre qui se détacheront de celle-ci, et qu'on obtient une surface libre de peluches.
